# EUROPEAN PATENT APPLICATION

(11) **EP 4 166 696 A1**
(43) Date of publication of application: **19.04.2023**
(21) Application number: 21926044.5
(22) Date of filing: 03.09.2021
(51) Int. Cl.: C25D 7/06, H01M 4/66

(54) **METAL FOIL AND METHOD FOR PREPARING SAME, AND CURRENT COLLECTOR, ELECTRODE, BATTERY AND ELECTRIC DEVICE**

(71) Applicant: Contemporary Amperex Technology Co., Limited, Ningde City, Fujian 352100 (CN)
(72) Inventor: WU, Yukun, Fujian 352100 (CN); GE, Xiaoming, Fujian 352100 (CN)
(74) Representative: Frick, Robert
(86) International application number: PCT/CN2021/116426
(87) International publication number: WO 2023/028983

(57) **Abstract**

This application provides a metal foil. The metal foil includes a first metal layer and a metal base layer that are stacked up. A roughness Rz of a surface that is of the metal base layer and that is oriented toward the first metal layer is α₁ µm, a roughness Rz of a surface that is of the first metal layer and that is oriented back from the metal base layer is β₁ µm, α₁ = 1.8 to 2.9, and β₁ = 1 to 1.4.

## Description

### TECHNICAL FILED

This application relates to the technical field of lithium batteries, and in particular, to a metal foil and a preparation method thereof, a current collector, an electrode, a battery, and an electrical device.

### BACKGROUND

In recent years, the application scope of lithium-ion batteries has been expanded. The lithium-ion batteries are widely used in energy storage power systems such as hydro, thermal, wind, and solar power stations, and many other fields such as electric tools, electric bicycles, electric motorcycles, and electric vehicles, military equipment, and aerospace. The great development of the lithium-ion batteries gives rise to higher requirements on the energy density, cycle performance, safety performance, and other performance of the batteries.

In a lithium-ion battery, the current collector is a carrier that carries an electrode active material. The active material of the lithium-ion battery is prone to some expansion and shrinkage in charge-and-discharge cycles. The repeated volume changes are prone to cause peel-off of the active material from the current collector. Therefore, improving a bonding force between the active material and the current collector is conducive to achieving stable battery performance.

### SUMMARY

This application is targeted at the foregoing problems, and aims to provide a current collector characterized by an improved bonding force between the current collector and an active material.

To achieve the foregoing objective, a first aspect of this application provides a metal foil, where the metal foil includes a first metal layer and a metal base layer that are stacked up. A roughness Rz of a surface that is of the metal base layer and that is oriented toward the first metal layer is α₁ µm, a roughness Rz of a surface that is of the first metal layer and that is oriented back from the metal base layer is β₁ µm, α₁ = 1.8 to 2.9, and β₁ = 1 to 1.4. The metal foil possesses an improved force of bonding with the active material.

In any embodiment, the metal foil includes the first metal layer, the metal base layer, and a second metal layer that are stacked up. The metal base layer is located between the first metal layer and the second metal layer. A roughness Rz of a surface that is of the metal base layer and that is oriented toward the second metal layer is α₂ µm, a roughness Rz of a surface that is of the second metal layer and that is oriented back from the metal base layer is β₂ µm, α₂ = 1.8 to 2.9, and β₂ = 1 to 1.4. Both sides of the metal foil possess an improved force of bonding with the active material.

In any embodiment, a ratio of α₁ to α₂ is 0.9 to 1.1, and optionally 1. Both sides of the metal foil possess homogeneous structures and properties.

In any embodiment, a ratio of β₁ to β₂ is 0.9 to 1.1, and optionally 1. Both sides of the metal foil possess homogeneous structures and properties.

In any embodiment, α₁ = 2.4 to 2.6; and β₁ = 1.1 to 1.3. The metal foil possesses an improved force of bonding with the active material.

In any embodiment, α₂ = 2.4 to 2.6; and β₂ = 1.1 to 1.3. The metal foil possesses an improved force of bonding with the active material.

In any embodiment, an average grain size a of the first metal layer and an average grain size z of the metal base layer satisfy: a: z = 1: (3 to 35), for example, a: z = 1: (5.4 to 32.9). The metal foil is cost-efficient and of relatively high performance.

In any embodiment, an average grain size b of the second metal layer and an average grain size z of the metal base layer satisfy: a: z = 1: (3 to 35), for example, b: z = 1: (3.5 to 35.2). The metal foil is cost-efficient and of relatively high performance.

In any embodiment, measured in nm, an average grain size a of the first metal layer satisfies 10 ≤ a ≤ 70; measured in nm, an average grain size z of the metal base layer satisfies 100 ≤ z ≤ 1000; and measured in nm, an average grain size of a second metal layer satisfies 10 ≤ b ≤ 70. The metal foil is cost-efficient and possesses good mechanical properties.

In any embodiment, measured in nm, an average grain size a of the first metal layer satisfies 15 ≤ a ≤ 57; measured in nm, an average grain size z of the metal base layer satisfies 114 < z ≤ 925; and measured in nm, an average grain size of a second metal layer satisfies 14 ≤ b ≤ 69. The metal foil is cost-efficient and possesses good mechanical properties.

In any embodiment, a thickness of the first metal layer is 1.2 to 2.0 µm, a thickness of the metal base layer is 4.4 to 5.2 µm, and a thickness of a second metal layer is 1.2 to 2.0 µm. The metal foil possesses an appropriate thickness and good mechanical properties, and is suitable for use as a current collector of a battery.

In any embodiment, a total thickness of the metal foil is 7.2 to 8.4 µm. The metal foil possesses an appropriate thickness and good mechanical properties, and is suitable for use as a current collector of a battery.

In any embodiment, a tensile strength of the metal foil is at least 34 kg/mm², and optionally 34 to 40 kg/mm². The metal foil possesses improved mechanical properties, and is suitable for use as a current collector of a battery.

In any embodiment, an elongation rate of the metal foil is at least 3.2%, and optionally 3.2% to 3.8%. The metal foil possesses improved mechanical properties, and is suitable for use as a current collector of a battery.

In any embodiment, a bonding force of the metal foil is at least 12 N/m², and optionally 12 to 17 N/m². The metal foil possesses an improved bonding force, and is suitable for use as a current collector of a battery.

In any embodiment, the first metal layer, the metal base layer, and a second metal layer each are independently made of copper, aluminum, nickel, titanium, silver, or an alloy of any one thereof. The metal foil possesses stable chemical properties, and is suitable for use as a current collector of a battery.

In any embodiment, the first metal layer, the metal base layer, and the second metal layer are all made of copper or a copper alloy. The metal foil is suitable for use as a current collector of a battery, especially a negative current collector.

A second aspect of this application provides a method for preparing a metal foil, characterized in that the method includes the following steps:
S1: providing a raw metal foil;
S2: roughening one surface of the raw metal foil to form a first roughened surface on one side of the raw metal foil, where a roughness Rz of the first roughened surface is α₁ µm, and α₁ = 1.8 to 2.9; and
S3: depositing a first metal layer on the first roughened surface.

A roughness Rz of a surface that is of the first metal layer and that is oriented back from the first roughened surface is β₁ µm, and β₁ = 1 to 1.4. The metal foil prepared from this method possesses an improved bonding force.

A third aspect of this application provides a method for preparing a metal foil, characterized in that the method includes the following steps:
S1: providing a raw metal foil;
S2: roughening both surfaces of the raw metal foil to form a first roughened surface and a second roughened surface on two sides of the raw metal foil respectively, where a roughness Rz of the first roughened surface is α₁ µm, and a roughness Rz of the second roughened surface is α₂ µm, α₁ = 1.8 to 2.9, and α₂ = 1.8 to 2.9; and
S3: depositing a first metal layer on the first roughened surface, and depositing a second metal layer on the second roughened surface.

A roughness Rz of a surface that is of the first metal layer and that is oriented back from the first roughened surface is β₁ µm, and β₁ = 1 to 1.4.

A roughness Rz of a surface that is of the second metal layer and that is oriented back from the second roughened surface is β₂ µm, and β₂ = 1 to 1.4. The metal foil prepared from this method possesses an improved bonding force.

In any embodiment, in step S2, the roughness of both surfaces of the raw metal foil is achieved by one or more of the following processing methods: chemical etching, electrochemical etching, or a combination thereof. The metal foil prepared from this method possesses an improved bonding force.

In any embodiment, in step S3, the raw metal foil is prepared by a first electrodeposition step, both surfaces of the raw metal foil are roughened by chemical etching, and the first metal layer and a second metal layer are deposited on the first roughened surface and a second roughened surface respectively by a second electrodeposition step. The metal foil prepared from this method possesses an improved bonding force.

In any embodiment, in step S3, the first electrodeposition step is implemented in a first electroplating solution, and the first electroplating solution includes the following components:

| | |
|---|---|
| Cu²⁺ | 50 g/L to 100 g/L; |
| H₂SO₄ | 150 g/L to 250 g/L; |
| Cl⁻ | 0.03 g/L to 0.08 g/L; |

Optionally, the first electroplating solution further contains a gloss agent, a planarization agent, or a combination thereof.

Optionally, a pH value of the first electroplating solution is less than 4. The metal foil prepared from this method possesses an improved bonding force.

In any embodiment, in step S2, chemical etching is implemented in an etching solution, and the etching solution includes the following components:
1-butyl-3-methylimidazolium chloride 0.5 g/L to 5 g/L; and
copper sulfate 50 g/L to 250 g/L. The metal foil prepared from this method possesses an improved bonding force.

In any embodiment, a second electrodeposition step is implemented in a second electroplating solution, and the second electroplating solution includes the following components:

| | |
|---|---|
| Cu²⁺ 50 | g/L to 100 g/L; |
| H₂SO₄ | 150 g/L to 250 g/L; and |
| Cl⁻ | 0.03 g/L to 0.08 g/L. |

The metal foil prepared from this method possesses an improved bonding force.

In any embodiment, the second electroplating solution further contains an electroplating additive such as a gloss agent, a planarization agent, or a combination thereof; and
In any embodiment, a pH value of the first electroplating solution is less than 4.

In any embodiment, a current density in a first electrodeposition step is C₁ A/dm², and a current density in a second electrodeposition step is C₂ A/dm², and therefore, 1.25 ≤ C₁: C₂ <_ 5.

Optionally, C₁ is 25 to 100, and C₂ is 10 to 40. The metal foil prepared from this method possesses an improved bonding force.

A fourth aspect of this application provides a current collector, including the metal foil according to any one of the foregoing aspects, or the metal foil prepared by the method according to any one of the foregoing aspects.

A fifth aspect of this application provides a battery, including the current collector according to any one of the foregoing aspects.

A sixth aspect of this application provides an electrical device. The electrical device includes the battery according to any one of the foregoing aspects, and the battery is configured to provide electrical energy.

### Beneficial Effects

One or more embodiments of the present disclosure achieve one or more of the following benefits:
(1) The metal foil is used as a current collector, the bonding force between the current collector and the active material is improved, and then the stability of an electrode based on the current collector is improved, and in turn, comprehensive performance based on the electrode is improved.
(2) The metal foil in some embodiments possesses improved strength and toughness.
(3) The metal foil in some embodiments is easy to produce, and superior in cost-efficiency, production efficiency, and performance.

### BRIEF DESCRIPTION OF DRAWINGS

FIG. 1 is a schematic diagram of a production system of a metal foil according to some embodiments of this application;
FIG. 2 is a schematic diagram of a metal foil according to some embodiments of this application;
FIG. 3 is a schematic diagram of an electrode according to some embodiments of this application;
FIG. 4 shows an illustrative stress-strain curve.
FIG. 5 (a) to (d) show a flowchart of a peeling test.
FIG. 6 is a schematic diagram of a secondary battery according to an embodiment of this application;
FIG. 7 is an exploded view of a secondary battery shown in FIG. 6 according to an embodiment of this application;
FIG. 8 is a schematic diagram of a battery module according to an embodiment of this application;
FIG. 9 is a schematic diagram of a battery pack according to an embodiment of this application;
FIG. 10 is an exploded view of the battery pack shown in FIG. 9 according to an embodiment of this application; and
FIG. 11 is a schematic diagram of an electrical device that uses a secondary battery as a power supply according to an embodiment of this application.

Reference numerals:
first electrodeposition device 11; first electroplating bath 111; first anode plate 112; first cathode roller 116; etching device 15; etching bath 151; second electrodeposition device 12; second electroplating bath 121; second anode plate A 122; second anode plate B 128; second cathode roller 126; roller 130; raw metal foil 110; etched metal foil 150;
   finished metal foil 120;
first metal layer 21; metal base layer 22; second metal layer 23; surface 221 that is of the metal base layer and that is oriented toward the first metal layer; surface 210 that is of the first metal layer and that is oriented back from the metal base layer; surface 223 that is of the metal base layer and that is oriented toward the second metal layer; surface 230 that is of the second metal layer and that is oriented back from the metal base layer; first active material layer 31; second active material layer 33; and
battery pack 1; upper box 2; lower box 3; battery module 4; secondary battery 5; housing 51; electrode assembly 52; cap assembly 53.

### DETAILED DESCRIPTION OF EMBODIMENTS

The following describes in detail a metal foil and a preparation method thereof, an electrode plate, a secondary battery, a battery module, a battery pack, and an electrical device according to this application with due reference to drawings. However, unnecessary details may be omitted in some cases. For example, a detailed description of a well-known matter or repeated description of a substantially identical structure may be omitted. That is intended to prevent the following descriptions from becoming unnecessarily long, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and may be arbitrarily combined. That is, any lower limit may be combined with any upper limit to form a range. For example, if a range of 60 to 120 and a range of 80 to 110 are listed for a given parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, the numerical range "0 to 5" means that all real numbers between 0 and 5 inclusive are listed herein, and the range "0 to 5" is just a brief representation of combinations of such numbers. In addition, when a parameter is expressed as an integer greater than or equal to 2, the expression is equivalent to that the parameter is an integer such as 2, 3, 4, 5, 6, 7, 8, 9, 10, 11, 12, and the like.

Unless otherwise expressly specified herein, all embodiments and optional embodiments hereof may be combined with each other to form a new technical solution.

Unless otherwise expressly specified herein, all technical features and optional technical features hereof may be combined with each other to form a new technical solution.

Unless otherwise expressly specified herein, all the steps described herein may be performed sequentially or randomly, and optionally, performed sequentially. For example, that the method includes steps (a) and (b) indicates that the method may include steps (a) and (b) performed sequentially, or steps (b) and (a) performed sequentially. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, and may also mean closed-ended inclusion. For example, the terms "include" and "comprise" may mean inclusion of other items not listed, or inclusion of only the listed items.

Unless otherwise expressly specified herein, the term "or" is inclusive. For example, the phrase "A or B" means "A alone, B alone, or both A and B." More specifically, the condition "A or B" is satisfied by any of the following: A is true (or existent) and B is false (or absent); A is false (or absent) and B is true (or existent); or, both A and B are true (or existent).

To achieve the foregoing objective, a first aspect of this application provides a metal foil, where the metal foil includes a first metal layer and a metal base layer that are stacked up. A roughness Rz of a surface that is of the metal base layer and that is oriented toward the first metal layer is α₁ µm, a roughness Rz of a surface that is of the first metal layer and that is oriented back from the metal base layer is β₁ µm, α₁ = 1.8 to 2.9 (for example, 1.8 to 1.9, 1.9 to 2, 2 to 2.1, 2.1 to 2.2, 2.2 to 2.3, 2.3 to 2.4, 2.4 to 2.5, 2.5 to 2.6, 2.6 to 2.7, 2.7 to 2.8, or 2.8 to 2.9), and β₁ = 1 to 1.4 (for example, 1 to 1.1, 1.1 to 1.2, 1.2 to 1.3, or 1.3 to 1.4). The metal foil possesses an improved force of bonding with the active material.

Although the underlying mechanism remains unclear, the applicant hereof unexpectedly finds that, in this application, by using a relatively high roughness of the surface that is of the metal base layer and that is oriented toward the first metal layer (for example, letting the roughness be greater than or equal to 3 µm), despite the fact that the bonding force between an excessively rough surface and an active material is not high, after the surface is overlaid with the first metal layer, the first metal layer achieves the following advantages: on the one hand, the first metal layer inherits the rough contour of the surface of the metal base layer; on the other hand, the first metal layer modifies and improves a micro-morphology of the surface of the metal base layer, thereby ultimately producing a surface suitable for bonding with the active material, and exhibiting an unexpected force of bonding with the active material.

In any embodiment, the term "stacked" means that two layers fit with each other directly or indirectly. In this context, the term "directly" means that no intervening layer, for example, exists between two layers, and the term "indirectly" means that an intervening layer exists between the two layers.

In any embodiment, the metal foil includes the first metal layer, the metal base layer, and a second metal layer that are stacked. The metal base layer is located between the first metal layer and the second metal layer. A roughness Rz of a surface that is of the metal base layer and that is oriented toward the second metal layer is α₂ µm, a roughness Rz of a surface that is of the second metal layer and that is oriented back from the metal base layer is β₂ µm, α₁ = 1.8 to 2.9, (for example, 1.8 to 1.9, 1.9 to 2, 2 to 2.1, 2.1 to 2.2, 2.2 to 2.3, 2.3 to 2.4, 2.4 to 2.5, 2.5 to 2.6, 2.6 to 2.7, 2.7 to 2.8, or 2.8 to 2.9), and β₁ = 1 to 1.4 (for example, 1 to 1.1, 1.1 to 1.2, 1.2 to 1.3, or 1.3 to 1.4). Both sides of the metal foil possess an improved force of bonding with the active material.

Although the underlying mechanism remains unclear, the applicant hereof unexpectedly finds that, in this application, by using a relatively high roughness of the surfaces that are of the metal base layer and that are oriented toward the first metal layer and the second metal layer respectively (for example, letting the roughness be greater than or equal to 3 µm), despite the fact that the bonding force between an excessively rough surface and an active material is not high, after the surface is overlaid with the first metal layer or the second metal layer, the first metal layer and the second metal layer achieve the following advantages: on the one hand, the two metal layers inherit the rough contour of the surface of the metal base layer; on the other hand, the two metal layers modify and improve a micro-morphology of the surface of the metal base layer, thereby ultimately producing a surface suitable for bonding with the active material, and exhibiting an unexpected force of bonding with the active material.

In any embodiment, a ratio of α₁ to α₂ is 0.9 to 11 (for example, 1). Both sides of the metal foil possess homogeneous structures and properties, thereby being symmetrical, and achieving improved performance when applied to a current collector of a battery.

In any embodiment, a ratio of β₁ to β₂ is 0.9 to 1.1 (for example, 1). Both sides of the metal foil possess homogeneous structures and properties, thereby being symmetrical, and achieving improved performance when applied to a current collector of a battery.

In any embodiment, α₁ = 2.4 to 2.6; and β₁ = 1.1 to 1.3. The metal foil possesses an improved force of bonding with the active material.

In any embodiment, α₂ = 2.4 to 2.6; and β₂ = 1.1 to 1.3. The metal foil possesses an improved force of bonding with the active material.

In any embodiment, an average grain size a of the first metal layer and an average grain size z of the metal base layer satisfy: a: z = 1: (3 to 35) (for example, 3 to 10, 10 to 20, 20 to 30, or 30 to 35), and b: z = 1: (3 to 35) (for example, 3 to 10, 10 to 20, 20 to 30, or 30 to 35). The metal foil is cost-efficient and of relatively high performance. When such a metal foil is used as a current collector, the bonding force between the current collector and the active material is further improved. The use of a metal base layer with a relatively large grain size is conducive to production. In contrast to a small grain size, producing a metal deposition layer with a large grain size is more efficient and cost-effective, without sacrificing the performance of the finished metal foil.

In any embodiment, measured in nm, an average grain size a of the first metal layer satisfies 10 ≤ a ≤ 70 (for example, 10 to 20, 20 to 30, 30 to 40, 40 to 50, 50 to 60, or 60 to 70); measured in nm, an average grain size z of the metal base layer satisfies 100 ≤ z ≤ 1000 (for example, 10 to 20, 20 to 30, 30 to 40, 40 to 50, 50 to 60, 60 to 70, 70 to 80, 80 to 90, or 90 to 100); and, measured in nm, an average grain size of a second metal layer satisfies 10 ≤ b ≤ 70 (for example, 10 to 20, 20 to 30, 30 to 40, 40 to 50, 50 to 60, or 60 to 70). The metal foil possesses an improved force of bonding with the active material.

In any embodiment, measured in nm, the average grain size a of the first metal layer satisfies 15 ≤ a ≤ 57; measured in nm, the average grain size z of the metal base layer satisfies 114 ≤ z ≤ 925; and measured in nm, the average grain size of a second metal layer satisfies 14 ≤ b ≤ 69. The metal foil possesses an improved force of bonding with the active material.

In any embodiment, a thickness of the first metal layer is 1.2 to 2.0 µm, a thickness of the metal base layer is 4.4 to 5.2 µm, and a thickness of a second metal layer is 1.2 to 2.0 µm. The metal foil possesses a moderate thickness and good mechanical properties, and is suitable for use as a current collector of a battery.

In any embodiment, a total thickness of the metal foil is 7.2 to 8.4 µm. The metal foil possesses an appropriate thickness and good mechanical properties, and is suitable for use as a current collector of a battery.

In any embodiment, a tensile strength of the metal foil is at least 34 kg/mm², and optionally 34 to 40 kg/mm². The metal foil possesses improved mechanical properties, and is suitable for use as a current collector of a battery.

In any embodiment, an elongation rate of the metal foil is at least 3.2%, and optionally 3.2% to 3.8%. The metal foil possesses improved mechanical properties, and is suitable for use as a current collector of a battery.

In any embodiment, a bonding force of the metal foil is at least 12 N/m², and optionally 12 to 17 N/m². The metal foil possesses an improved bonding force, and is suitable for use as a current collector of a battery.

In any embodiment, the first metal layer, the metal base layer, and a second metal layer each are independently made of copper, aluminum, nickel, titanium, silver, or an alloy of any one thereof. The metal foil possesses stable chemical properties, and is suitable for use as a current collector of a battery.

In any embodiment, the first metal layer, the metal base layer, and the second metal layer are all made of copper or a copper alloy. The metal foil is well adaptable to a negative electrode material of the battery, and is suitable for use as a current collector of a battery, especially a negative current collector.

A second aspect of this application provides a method for preparing a metal foil, characterized in that the method includes the following steps:
S1: providing a raw metal foil;
S2: roughening one surface of the raw metal foil to form a first roughened surface on one side of the raw metal foil, where a roughness Rz of the first roughened surface is α₁ µm, and α₁ = 1.8 to 2.9; and
S3: depositing a first metal layer on the first roughened surface.

A roughness Rz of a surface that is of the first metal layer and that is oriented back from the first roughened surface is β₁ µm, and β₁ = 1 to 1.4. The metal foil prepared from this method possesses an improved bonding force.

The metal foil prepared from this method possesses an improved bonding force.

A third aspect of this application provides a method for preparing a metal foil, characterized in that the method includes the following steps:
S1: providing a raw metal foil;
S2: roughening both surfaces of the raw metal foil to form a first roughened surface and a second roughened surface on two sides of the raw metal foil respectively, where a roughness Rz of the first roughened surface is α₁ µm, and a roughness Rz of the second roughened surface is α₂ µm, α₁ = 1.8 to 2.9, and α₂ = 1.8 to 2.9; and
S3: depositing a first metal layer on the first roughened surface, and depositing a second metal layer on the second roughened surface.

A roughness Rz of a surface that is of the first metal layer and that is oriented back from the first roughened surface is β₁ µm, and β₁ = 1 to 1.4.

A roughness Rz of a surface that is of the second metal layer and that is oriented back from the second roughened surface is β₂ µm, and β₂ = 1 to 1.4. Both surfaces of the metal foil prepared from this method possess an improved bonding force.

In any embodiment, in step S2, the roughness of both surfaces of the raw metal foil is achieved by one or more of the following processing methods: chemical etching, electrochemical etching, or a combination thereof. The metal foil prepared from this method possesses an improved bonding force.

In any embodiment, in step S3, the raw metal foil is prepared by a first electrodeposition step, both surfaces of the raw metal foil are roughened by chemical etching, and the first metal layer and a second metal layer are deposited on the first roughened surface and a second roughened surface respectively by a second electrodeposition step. The metal foil prepared from this method possesses an improved bonding force.

In any embodiment, the first metal layer and/or the second metal layer is deposited on the surface of the metal base layer by one or more of the following methods: for example, sputtering, electroplating, molding, chemical vapor deposition (Chemical Vapor Deposition, CVD), physical vapor deposition (Physical Vapor Deposition, PVD), evaporation, hybrid physical-chemical vapor deposition (Hybrid Physical-Chemical Vapor Deposition, HPCVD), plasma enhanced chemical vapor deposition (Plasma Enhanced Chemical Vapor Deposition, PECVD), low pressure chemical vapor deposition (Low Pressure Chemical Vapor Deposition, LPCVD), and the like.

In any embodiment, the first metal layer and/or the second metal layer are stacked on the surface of the metal base layer separately by means of electrodeposition.

The term "electrodeposition" means a process by which electrons are donated to ionic metal to form a non-ionic coating layer on a conductive surface. A corresponding system may include a chemical solution of a metal in ionic form, an anode (that is, an electrode that can be negatively charged corresponding to a metal to be plated), and a cathode (that is, a positively charged electrode that donates electrons to produce a non-ionic metal film on the conductive surface). For electroplating with or electrodepositing a metal such as copper, a water-based solution containing the metal to be deposited as ions (especially, a dissolved metal salt) may be used. An electrical field between the anode and cathode can force positively charged metal ions to move to the cathode and deposit on the cathode surface.

The terms "electrodeposition" and "electroplating" are used interchangeably.

In any embodiment, in step S2, the roughness of both surfaces of the raw metal foil is achieved by one or more of the following processing methods: chemical etching, electrochemical etching, or a combination thereof. The metal foil prepared from this method possesses an improved bonding force.

In any embodiment, the term "chemical etching" means a process by which at least a part of materials is removed from the surface of the metal foil by a chemical etching solution to create a specific texture and/or roughness.

In any embodiment, the term "electrochemical etching" means a process by which at least a part of materials is removed from the surface of the metal foil under the action of an electric current by using the metal foil as an anode in an electrolytic solution, so as to create a specific texture and/or roughness.

In any embodiment, in step S3, the raw metal foil is prepared by a first electrodeposition step, both surfaces of the raw metal foil are roughened by chemical etching, and the first metal layer and a second metal layer are deposited on the first roughened surface and a second roughened surface respectively by a second electrodeposition step. The metal foil prepared from this method possesses an improved bonding force.

In any embodiment, in step S3, the first electrodeposition step is implemented in a first electroplating solution, and the first electroplating solution includes the following components:
Cu²⁺ 50 g/L to 100 g/L, for example, 60 g/L to 70 g/L, 70 g/L to 80 g/L, 80 g/L to 90 g/L, or 90 g/L to 100 g/L;
H₂SO₄ 150 g/L to 250 g/L, for example, 150 g/L to 170 g/L, 170 g/L to 190 g/L, 190 g/L to 210 g/L, 210 g/L to 230 g/L, or 230 g/L to 250 g/L; and
Cl⁻ 0.03 g/L to 0.08 g/L, for example, 0.03 g/L to 0.05 g/L, 0.05 g/L to 0.07 g/L, or 0.07 g/L to 0.08 g/L.

In any embodiment, the first electroplating solution further contains a gloss agent, a planarization agent, or a combination thereof. The metal foil prepared from this method possesses an improved bonding force.

In any embodiment, a pH value of the first electroplating solution is less than 4. The metal foil prepared from this method possesses an improved bonding force.

In any embodiment, in step S2, chemical etching is implemented in an etching solution, and the etching solution includes the following components:
1-butyl-3-methylimidazolium chloride 0.5 g/L to 5 g/L, for example, 0.5 g/L to 1 g/L, 1 g/L to 2 g/L, 2 g/L to 3 g/L, 3 g/L to 4g/L, or 4 g/L to 5 g/L; and
copper sulfate 50 g/L to 250 g/L.

The metal foil prepared from this method possesses an improved bonding force.

In any embodiment, a second electrodeposition step is implemented in a second electroplating solution, and the second electroplating solution includes the following components:
Cu²⁺ 50 g/L to 100 g/L, for example, 60 g/L to 70 g/L, 70 g/L to 80 g/L, 80 g/L to 90 g/L, or 90 g/L to 100 g/L;
H₂SO₄ 150 g/L to 250 g/L, for example, 150 g/L to 170 g/L, 170 g/L to 190 g/L, 190 g/L to 210 g/L, 210 g/L to 230 g/L, or 230 g/L to 250 g/L; and
Cl⁻ 0.03 g/L to 0.08 g/L, for example, 0.03 g/L to 0.05 g/L, 0.05 g/L to 0.07 g/L, or 0.07 g/L to 0.08 g/L.

The metal foil prepared from this method possesses an improved bonding force.

In any embodiment, the second electroplating solution further contains an electroplating additive such as a gloss agent, a planarization agent, or a combination thereof.

In any embodiment, a pH value of the first electroplating solution is less than 4.

In any embodiment, a current density in a first electrodeposition step is C₁ A/dm², and a current density in a second electrodeposition step is C₂ A/dm², and therefore, 1.25 ≤ C₁: C₂ < 5. The metal foil prepared from this method possesses an improved bonding force.

In any embodiment, C₁ is 25 to 100 (for example, 30 to 40, 40 to 50, 50 to 60, 60 to 70, 70 to 80, 80 to 90, or 90 to 100), and C₂ is 10 to 40 (for example, 10 to 15, 15 to 25, 25 to 35, or 35 to 40). The metal foil prepared from this method possesses an improved bonding force.

A fourth aspect of this application provides a current collector, including the metal foil according to any one of the foregoing aspects, or the metal foil prepared by the method according to any one of the foregoing aspects.

A fifth aspect of this application provides a battery, including the current collector according to any one of the foregoing aspects.

A sixth aspect of this application provides an electrical device. The electrical device includes the battery according to any one of the foregoing aspects, and the battery is configured to provide electrical energy.

In addition, a secondary battery, a battery module, a battery pack, and an electrical device according to this application are described below in detail with due reference to drawings.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Located between the positive electrode plate and the negative electrode plate, the separator mainly serves to prevent a short circuit between the positive electrode plate and the negative electrode plate, and is penetrable to ions.

### [Positive electrode plate]

The positive electrode plate includes a positive current collector and a positive film layer that overlays at least one surface of the positive current collector. The positive film layer includes a positive active material according to the first aspect of this application.

As an example, the positive current collector includes two surfaces opposite to each other in a thickness direction thereof. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material base layer and a metal layer formed on at least one surface of the polymer material base layer. The composite current collector may be formed by overlaying a polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known in the art for use in a battery. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. One of the positive active materials may be used alone, or at least two thereof may be combined and used together. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM₃₃₃), LiNi_{0.5}Co_{0.2}Mn_{0.3}O₂ (briefly referred to as NCM₅₂₃), LiNi_{0.5}Co_{0.25}Mn_{0.25}O₂ (briefly referred to as NCM₂₁₁), LiNi_{0.6}Co_{0.2}Mn_{0.2}O₂ (briefly referred to as NCM₆₂₂), LiNi_{0.8}Co_{0.1}Mn_{0.1}O₂ (briefly referred to as NCM₈₁₁)), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, and the binder and any other ingredients in a solvent (such as N-methyl-pyrrolidone) to form a positive slurry, coating a positive current collector with the positive slurry, and performing steps such as drying and cold pressing to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction thereof. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material base layer and a metal layer formed on at least one surface of the polymer material base layer. The composite current collector may be formed by overlaying a polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material that is well known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, silicon-oxygen compound, silicon-carbon composite, silicon-nitrogen composite, or silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be combined and used together.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold pressing to obtain the negative electrode plate.

### [Electrolyte]

The electrolyte serves to conduct ions between the positive electrode plate and the negative electrode plate. The type of the electrolyte is not specifically limited in this application, and may be selected as required. For example, the electrolyte may be in liquid- or gel-state, or all solid-state.

In some embodiments, the electrolyte is an electrolytic solution. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include additives capable of improving specified performance of the battery, for example, an additive for improving overcharge performance of the battery, an additive for improving high- or low-temperature performance of the battery, and the like.

### [Separator]

In some embodiments, the secondary battery further includes a separator. The type of the separator is not particularly limited in this application, and may be any well-known porous separator that is highly stable both chemically and mechanically.

In some embodiments, the separator may be made of at least one selected from glass fiber, nonwoven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be wound or stacked to form an electrode assembly.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

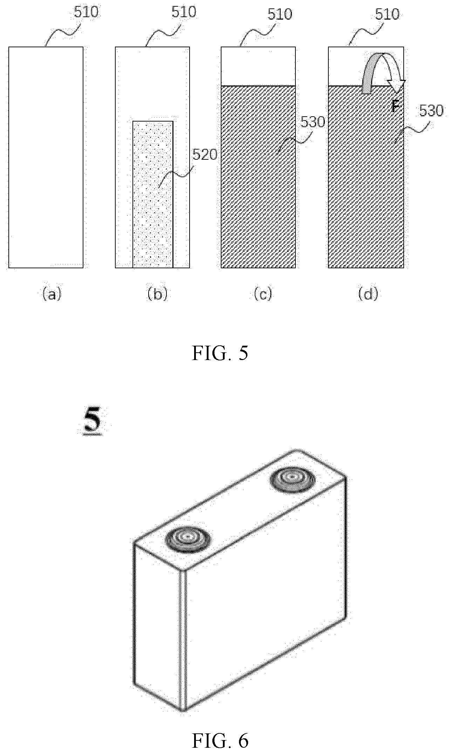

The shape of the secondary battery is not particularly limited in this application, and may be cylindrical, prismatic or any other shape. FIG. 6 shows a prismatic secondary battery 5 as an example.

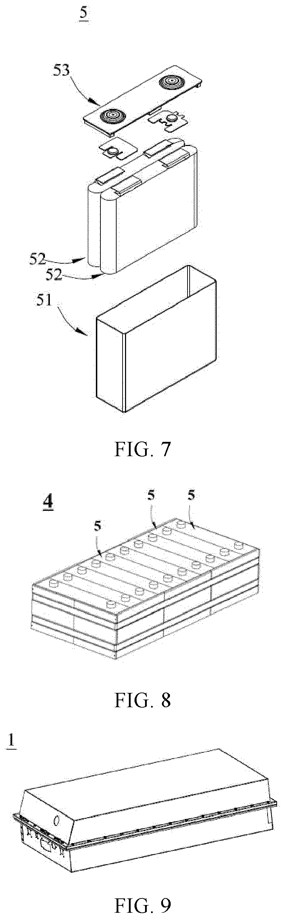

In some embodiments, referring to FIG. 7, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates with the accommodation cavity. The cover plate 53 can cover the opening to close the accommodation cavity. The positive electrode plate, the negative electrode plate, and the separator may be wound or stacked to form the electrode assembly 52. The electrode assembly 52 is packaged in the accommodation cavity. The electrolytic solution serves a function of infiltration in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on the application scenario and capacity of the battery module.

FIG. 8 shows a battery module 4 as an example. Referring to FIG. 8, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery modules may be assembled into a battery pack. The battery pack may include one or more battery modules, and the specific number of battery modules in a battery pack may be selected by a person skilled in the art depending on practical applications and capacity of the battery pack.

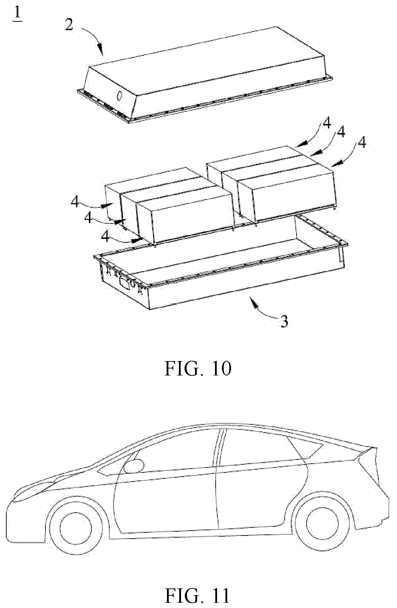

FIG. 9 and FIG. 10 show a battery pack 1 as an example. Referring to FIG. 9 and FIG. 10, the battery pack 1 may contain a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for the electrical device according to practical requirements of the electrical device.

FIG. 11 shows an electrical device as an example. The electrical device may be a battery electric vehicle, a hybrid electric vehicle, a plug-in hybrid electric vehicle, or the like. To meet the requirements of the electrical device on a high power and a high energy density of the secondary battery, a battery pack or a battery module may be employed.

In another example, the device may be a mobile phone, a tablet computer, a notebook computer, or the like. The apparatus is generally required to be thin and light, and may have a secondary battery as a power supply.

### Embodiments

The following describes embodiments of this application. The embodiments described below are exemplary, and are merely intended to construe this application but not to limit this application. In a case that no specific technique or condition is specified in an embodiment, the techniques or conditions described in the literature in this field or described in the instruction manual of the product may apply. A reagent or instrument used herein without specifying the manufacturer is a conventional product that is commercially available in the market.

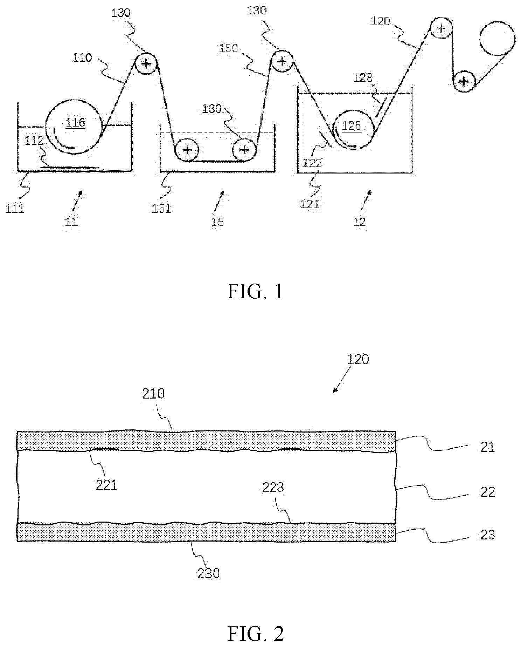

FIG. 1 is a schematic diagram of a production system of a metal foil for use in the following embodiments. As shown in FIG. 1, the production system of the metal foil for use in the following embodiments includes: a first electrodeposition device 11, an etching device 15, a second electrodeposition device 12, and a plurality of rollers 130 configured to pull the metal foil. The first electrodeposition device 11 produces an electrodeposited metal foil (electrodeposited metal foil) by a first electrodeposition step.

The first electrodeposition device 11 includes: a first electroplating bath 111, a first anode plate 112, and a first cathode roller 116. The first electroplating bath 111 contains an electroplating solution. The first anode plate 112 and the first cathode roller 116 are immersed in the electroplating solution. The first anode plate 112 and the first cathode roller 116 are disposed face to face. The raw metal foil 110 is generated between the first anode plate 112 and the first cathode roller 116. The first anode plate 112 and the first cathode roller 116 are made of titanium metal.

In the first electrodeposition device 11, the electroplating solution containing metal ions in the electrolytic bath 111 is electrolyzed under the action of the electric current between the first anode plate 112 and the first cathode roll 116, so that the metal ions are deposited on the surface of the first cathode roller 116 to form a metal deposition layer. The metal deposition layer is peeled off from the first cathode roller 116 to obtain the raw metal foil 110. Surface roughness varies between two sides of the raw metal foil 110. One side close to the first cathode roller 116 is relatively smooth, thereby referred to as a smooth side. The other side exhibits a convex-and-concave crystalline structure, and is relatively rough, thereby referred to as a rough side. The surface roughness varies greatly between the two sides of the raw metal foil 110, and the bonding force between each of the two surfaces and an active material is still insufficient.

The raw metal foil 110 produced by the first electrodeposition device 11 is directly transferred to the etching device 15 under traction of the roller 130. The etching device 15 includes an etching bath 151. The etching bath 151 contains an etching solution. A roller 130 configured to pull the metal foil is further disposed in the etching bath. In the etching device 15, the raw metal foil 110 is etched by the etching solution, so as to obtain an etched metal foil 150. The surface roughness of both sides of the etched metal foil 150 is higher than that of the raw metal foil 110. In addition, the surface roughness is relatively close between two sides of the etched metal foil 150. However, the bonding force between each of two surfaces of an etched copper foil and an active material is still insufficient.

Under traction of the roller 130, the etched metal foil 150 is directly transferred to the second electrodeposition device 12 to undergo a second electrodeposition step. The second electrodeposition device 12 includes: a second electroplating bath 121, a second anode plate A 122, a second anode plate B 128, and a second cathode roller 126. The second electroplating bath 121 contains an electroplating solution. The second cathode roller 126, the second anode plate A 122, and the second anode plate B 128 are immersed in the electroplating solution. For the metal foil pulled by the second cathode roller 126, the second anode plate A 122 faces one side of the metal foil, and the second anode plate B 128 faces the other side of the metal foil. Under traction of the roller 130, the metal foil first passes between the second anode plate A 122 and the second cathode roller B 126, and then passes between the second cathode roller 126 and the second anode plate B 128, so as to obtain a multi-layered finished metal foil 120. The second cathode roller 126, the second anode plate A 122, and the second anode plate B 128 are made of titanium metal.

In the second electrodeposition device 12, a first metal layer and a second metal layer are deposited on two surfaces of the etched metal foil 150 respectively to obtain a multi-layered finished metal foil 120. The surface roughness of both sides of the finished metal foil 120 is lower than that of the etched metal foil 150. In addition, the surface roughness value is basically equal between two surfaces of the finished metal foil 120.

FIG. 2 is a schematic diagram of a finished metal foil 120. As shown in the drawing, the finished metal foil 120 includes the first metal layer 21, the metal base layer 22, and the second metal layer 23 that are stacked up. The metal base layer 22 is located between the first metal layer 21 and the second metal layer 23. A roughness Rz of a surface 221 that is of the metal base layer and that is oriented toward the first metal layer is α₁ µm. A roughness Rz of a surface 210 that is of the first metal layer and that is oriented back from the metal base layer is β₁ µm, where α₁ = 1.8 to 2.9, and 0.5 ≤ α₁ - β₁ <_ 1.5. A roughness Rz of a surface 223 that is of the metal base layer and that is oriented toward the second metal layer is α₂ µm. A roughness Rz of a surface 230 that is of the second metal layer and that is oriented back from the metal base layer is β₂ µm, where α₂ ≥ 3, and 0.5 ≤ α₂ - β₂ ≤ 1.5.

Moreover, the bonding force between the finished metal foil 120 and the active material is increased significantly unexpectedly. Although the underlying mechanism remains unclear, a possible reason for the improved bonding force may be that the metal layer derived from the second electrodeposition step inherits the rough contour of the surface of the etched copper foil 150 on the one hand, and modifies and improves the micro-morphology of the surface of the etched copper foil 150 on the other hand, thereby obtaining a surface particularly suitable for bonding with the active material.

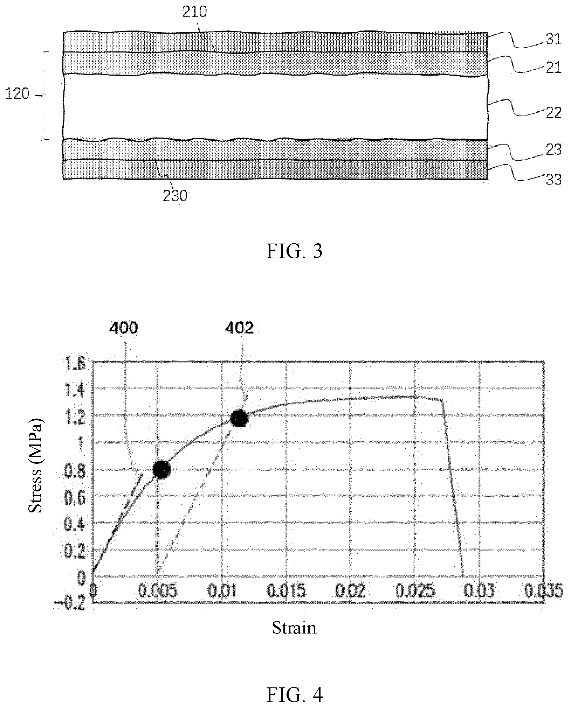

FIG. 3 shows an electrode according to some embodiments. The electrode includes a finished metal foil 120, a first active material layer 31, and a second active material layer 33 that are stacked up. The finished metal foil 120 is located between the first active material layer 31 and the second active material layer 33. The first active material layer 31 is stacked on the surface 210 that is of the first metal layer and that is oriented back from the metal base layer. The second active material layer 33 is stacked on the surface 230 that is of the second metal layer and that is oriented back from the metal base layer.

The following describes how to produce a copper foil using the foregoing production system of the metal foil, and how to prepare an electrode using the copper foil as a current collector.

### Embodiments 1 to 18

The components of the electroplating solution of the first electroplating bath and the second electroplating bath are shown in the following table:

**Table 1**

| Component | Concentration (g/L) |
|---|---|
| Copper sulfate (CuSO₄) | Concentration of Cu²⁺ is 75 g/L |
| Concentrated sulfuric acid (H₂SO₄, concentration 98%) | Concentration of H₂SO₄ is 180 g/L |
| Chloride ions | 0.05 g/L |
| Gloss agent (manufacturer: Jiangsu Mengde New Materials Technology Co., Ltd.; designation: SPS&MPS; main component: a mixture of sodium 3-mercaptopropane sulfonate and sodium polydithiodipropane sulfonate) | 0.31 g/L |
| Planarization agent (manufacturer: Jiangsu Mengde New Materials Technology Co., Ltd.; designation: MDN; main component: polypeptide protein) | 0.08 g/L |
| Solvent | Water |
| pH value | < 4 |

The formula of the etching solution in the etching bath is shown in the following table:

**Table 2**

| Component (chemical formula) | Concentration (g/L) |
|---|---|
| 1-butyl-3-methylimidazolium chloride | 2 g/L |
| Copper sulfate (CuSO₄) | 200 g/L |
| Solvent | Water |
| pH value | < 4 |

Steps of preparing an electrolytic copper foil in an electrolytic copper foil preparation system are as follows:
(1) Implement the first electrodeposition step by use of the first electrodeposition device to make a raw copper foil;
(2) Convey the raw copper foil to the etching bath for etching, and etch both sides of the raw copper foil to obtain an etched copper foil;
(3) Convey the etched copper foil to the second electrodeposition device to perform a second electrodeposition step on the etched copper foil, and deposit a first copper layer and a second copper layer on both sides of the etched copper foil to obtain a second copper foil; and
(4) Rinsing and drying the second copper foil to obtain a finished copper foil.

Table 3 shows technical parameters of the electrolytic copper foil preparation system, for example, first electrodeposition time, current density of the first electrodeposition step, etching time, second electrodeposition time, and current density of the second electrodeposition step.

### Comparative Embodiments 1 to 2

Comparative Embodiments 1 to 2 differ from Embodiment 1 in the technical parameters of the electrolytic copper foil preparation system, as detailed in Table 3 below.

### Comparative Embodiment 3

Comparative Embodiment 1 differs from Embodiment 1 in that the etching step is cancelled in Comparative Embodiment 1, the raw copper foil produced by the first electrodeposition device is directly conveyed to the second electrodeposition device, and a second electrodeposition step is performed on the etched copper foil, so that a first copper layer and a second copper layer are deposited on both sides of the etched copper foil to obtain the finished copper foil in Comparative Embodiment 1.

Other steps and parameters (for example, the first electrodeposition step and the second electrodeposition step) in Comparative Embodiment 1 are the same as those in Embodiment 1.

### Comparative Embodiment 4

Comparative Embodiment 2 differs from Embodiment 1 in:
(1) The duration of the first electrodeposition step performed in Comparative Embodiment 2 is 1 hour.
(2) In Comparative Embodiment 2, the second electrodeposition step is cancelled, and the etched copper foil is directly rinsed, dried and rewound to obtain the finished copper foil in Comparative Embodiment 2.

Other steps and parameters (for example, the first electrodeposition step and the etching step) in Comparative Embodiment 2 are the same as those in Embodiment 1.

### Analysis and Test

### 1. Analyzing surface roughness

For the copper foils prepared in Embodiments and Comparative Embodiments, the surface roughness Rz is measured with reference to the following standard: JIS B 0601,0031-1994 *Surface Roughness and Drawing Indication of Surface Texture.* The surface roughness parameters of the copper foils prepared in Embodiments 1 to 18 and intermediate products of each step are shown in Table 4.1 below. The surface roughness parameters of the copper foils prepared in Comparative Embodiments 1 to 2 and intermediate products of each step are shown in Table 4.2 below. In Table 4.1 to Table 4.2, the ratio R_{1:2} represents a ratio of the first surface roughness Rz₁ to the second surface roughness Rz₂. In Table 4.1, the difference (α-β) represents a difference between the first surface roughness Rz₁ of the etched copper foil and the first surface roughness Rz₁ of the finished copper foil, and a difference between the second surface roughness Rz₁ of the etched copper foil and the second surface roughness Rz₁ of the finished copper foil. In Table 4.2, the difference (α-β) represents a difference between the first surface roughness Rz₁ of the raw copper foil and the first surface roughness Rz₁ of the finished copper foil, and a difference between the second surface roughness Rz₁ of the raw copper foil and the second surface roughness Rz₁ of the finished copper foil.

### 2. Testing the bonding force, room-temperature tensile strength, and elongation rate

A method for testing the bonding force between the current collector copper foil and an active material is described below.

### 1. Preparing an electrode

Using the copper foil in the embodiments and comparative embodiments as a current collector, and disposing an active material layer on both surfaces of the current collector in the following way:
Coating a to-be-tested surface of a to-be-tested copper foil with a negative active material slurry of a lithium-ion battery, and performing drying and calendering to obtain an electrode plate. A compacted density of the electrode plate is 1.68 g/cm³, and an areal density of coating is 134 g/cm². The formula of the negative active material slurry of the lithium-ion battery is as follows: 96.8 wt% graphite, 0.4 wt% conductive carbon, 1.8 wt% styrene polybutadiene rubber, 1 wt% sodium carboxymethyl cellulose, and an appropriate amount of solvent (the solvent will volatilize in the subsequent drying process).

### 2. Peeling test

FIG. 5 (a) to (d) show a flowchart of a peeling test. As shown in FIG. 5 (a), a steel sheet 510 is provided first. Dimensions of the steel sheet are 30 mm (width) × 100 mm (length). As shown in FIG. 5 (b), double-sided tape 520 is provided. The size of the double-sided tape 520 is 20 mm (width) × 30 mm (length). The double-sided tape 520 is affixed to the steel sheet 510. One widthwise edge of the double-sided tape 520 is aligned with one widthwise edge of the steel sheet 510. As shown in FIG. 5 (c), a to-be-tested electrode plate 530 is then provided. The dimensions of the to-be-tested electrode plate 530 are 30 mm (width) × 30 mm (length). The to-be-tested electrode plate 530 overlays the double-sided tape 520. The coated surface of the electrode plate 530 faces the double-sided tape 520, and one widthwise edge of the to-be-tested electrode plate 530 is aligned with one widthwise edge of the steel sheet 510. Because the length of the to-be-tested electrode plate 530 is greater than the length of the double-sided tape 520, a part of region of the to-be-tested electrode plate 520 is not bonded to the double-sided tape. As shown in FIG. 5 (d), the steel sheet 510 is fixed on a pedestal of a tensile testing machine. An end that is of the to-be-tested electrode plate 530 and that is not bonded to the double-sided tape is held with a clamp, and then the clamp is stretched toward the other end (in a direction indicated by the arrow). The direction of the stretching force is parallel to the strength direction of the steel sheet 510, and closely fits with the surface of the steel sheet 510. During the stretching, the electrode plate 530 is caused to be gradually peeled off from the steel sheet. During the stretching, the stretching speed of the clamp is 50 mm/min. During the stretching, the tensile force of the clamp is recorded. After the tensile force becomes steady, the electrode plate is further peeled by a length of 70 mm. An average tensile force under this peeling length is the bonding force.

The room-temperature tensile strength and elongation rate of a copper foil are measured with reference to the following method: stamping a finished copper foil that has stood statically for 24 hours into a dumbbell shape (gauge length 50 mm, gauge width 3 mm), and then performing a tensile test and plotting a stress-strain curve. FIG. 4 shows an illustrative stress-strain curve, where the X-axis represents a strain value. A strain value 0.005 means that the elongation rate is 0.5%. The tensile strength corresponding to the elongation rate 0.5% is the curve stress value corresponding to the strain value of 0.005. When a straight line 402 parallel to a line segment 400 is drawn from a 0.005 point of the curve on the strain axis, an intersection between the straight line 402 and the stress-strain curve is a plastic deformation stress value corresponding to an elongation rate of 0.5% (yield strength corresponding to the elongation rate of 0.5%). The line segment 400 is a tangent line of the stress-strain curve at the strain of 0.

Table 3 and Table 4 show the data of tensile strength, elongation rate, and bonding force of Embodiments 1 to 18 and Comparative Embodiments 1 to 4.

**Table 3**

| | First electrodeposition step | | Etching | Second electrodeposition step | | Metal base layer | | | | First metal layer | | | Second metal layer | | |
|---|---|---|---|---|---|---|---|---|---|---|---|---|---|---|---|
| Embodiment | Time (h) | Current density (A/dm²) | Time (min) | Time (h) | Current density (A/dm²) | Roughness α₁ (µm) | Roughness α₂ (µm) | Thickness d₀ (µm) | Grain size z (nm) | Roughness β₁ (µm) | Thickness d₁ (µm) | Grain size a (nm) | Roughness β₂ (µm) | Thickness d₂ (µm) | Grain size b (nm) |
| 1 | 0.6 h | 50 | 2 | 0.5 | 20 | 1.8 | 1.9 | 4.8 | 493 | 1.2 | 1.6 | 30 | 1.1 | 1.6 | 45 |
| 2 | 0.6 h | 50 | 2.4 | 0.5 | 20 | 2.5 | 2.5 | 4.8 | 493 | 1.2 | 1.6 | 25 | 1.2 | 1.6 | 29 |
| 3 | 0.6 h | 50 | 3 | 0.5 | 20 | 2.8 | 2.9 | 4.8 | 493 | 1.3 | 1.6 | 41 | 1.2 | 1.6 | 33 |
| 4 | 0.6 h | 50 | 2 | 1 | 10 | 2.6 | 2.5 | 4.8 | 493 | 1 | 1.6 | 19 | 1.1 | 1.6 | 17 |
| 5 | 0.6 h | 50 | 2.4 | 0.5 | 20 | 2.5 | 2.5 | 4.8 | 493 | 1.2 | 1.6 | 25 | 1.2 | 1.6 | 29 |
| 6 | 0.6 h | 50 | 3 | 0.25 | 40 | 2.4 | 2.5 | 4.8 | 493 | 1.4 | 1.6 | 53 | 1.3 | 1.6 | 66 |
| 7 | 0.6 h | 50 | 2.4 | 0.375 | 20 | 2.6 | 2.5 | 4.8 | 493 | 1.3 | 1.2 | 29 | 1.3 | 1.2 | 34 |
| 8 | 0.6 h | 50 | 2.4 | 0.5 | 20 | 2.5 | 2.5 | 4.8 | 493 | 1.2 | 1.6 | 25 | 1.2 | 1.6 | 29 |
| 9 | 0.6 h | 50 | 2.4 | 0.625 | 20 | 2.4 | 2.5 | 4.8 | 493 | 1.1 | 2 | 22 | 1.2 | 2 | 40 |
| 10 | 0.55 | 50 | 2.4 | 0.5 | 20 | 2.4 | 2.5 | 4.4 | 605 | 1.2 | 1.6 | 31 | 1.2 | 1.6 | 41 |
| 11 | 0.6 h | 50 | 2.4 | 0.5 | 20 | 2.5 | 2.5 | 4.8 | 493 | 1.2 | 1.6 | 25 | 1.2 | 1.6 | 29 |
| 12 | 0.65 | 50 | 2.4 | 0.5 | 20 | 2.6 | 2.5 | 5.2 | 553 | 1.2 | 1.6 | 38 | 1.3 | 1.6 | 30 |
| 13 | 0.6 h | 50 | 2.4 | 1 | 10 | 2.6 | 2.5 | 4.8 | 493 | 1.2 | 1.6 | 15 | 1.2 | 1.6 | 14 |
| 14 | 0.6 h | 50 | 2.4 | 0.5 | 20 | 2.5 | 2.5 | 4.8 | 493 | 1.2 | 1.6 | 25 | 1.2 | 1.6 | 29 |
| 15 | 0.6 h | 50 | 2.4 | 0.25 | 40 | 2.4 | 2.5 | 4.8 | 493 | 1.2 | 1.6 | 57 | 1.2 | 1.6 | 69 |
| 16 | 1.2h | 25 | 2.4 | 0.5 | 20 | 2.3 | 2.4 | 4.8 | 114 | 1.2 | 1.6 | 21 | 1.3 | 1.6 | 33 |
| 17 | 0.6 h | 50 | 2.4 | 0.5 | 20 | 2.5 | 2.5 | 4.8 | 493 | 1.2 | 1.6 | 25 | 1.2 | 1.6 | 29 |
| 18 | 0.3 h | 100 | 2.4 | 0.5 | 20 | 2.6 | 2.6 | 4.8 | 925 | 1.3 | 1.6 | 30 | 1.3 | 1.6 | 40 |
| Comparative Embodiment | | | | | | | | | | | | | | | |
| 1 | 0.6 h | 50 | 1.5 | 0.5 | 20 | 1.5 | 1.5 | 4.8 | 493 | 1 | 1.6 | 35 | 1.1 | 1.6 | 43 |
| 2 | 0.6 h | 50 | 4 | 0.5 | 20 | 3 | 3.1 | 4.8 | 493 | 2.8 | 1.6 | 89 | 2.7 | 1.6 | 91 |
| 3 | 1 h | 50 | 2.4 | No second electrodeposition step | | 2.5 | 2.5 | 4.8 | 493 | - | - | - | - | - | - |
| 4 | 0.6 h | 50 | No etching | 0.5 h | 20 | 1.2 | 1.3 | 4.8 | 493 | 1 | 1.6 | 33 | 1.1 | 1.6 | 44 |

| | | | | | | | | | | | | | | | |
|---|---|---|---|---|---|---|---|---|---|---|---|---|---|---|---|
| The roughness Rz of the surface that is of the metal base layer and that is oriented toward the first metal layer is α₁ µm. The roughness Rz of the surface that is of the metal base layer and that is oriented toward the second metal layer is α₂ µm. The roughness Rz of the surface that is of the first metal layer and that is oriented back from the metal base layer is β₁ µm. The roughness Rz of the surface that is of the second metal layer and that is oriented back from the metal base layer is β₂ µm. | | | | | | | | | | | | | | | |

**Table 4**

| | Roughness | | | | | | Grain size ratio | | First surface | Second surface | Tensile strength | Elongation rate |
|---|---|---|---|---|---|---|---|---|---|---|---|---|
| | Metal base layer Roughness α₁ (µm) | Metal base layer Roughness α₂ (µm) | First metal layer Roughness β₁ (µm) | Second metal layer Roughness β₂ (µm) | α₁/α₂ | β₁/β₂ | z/a | z/b | Bonding force | Bonding force | | |
| Embodiment 1 | 1.8 | 1.9 | 1.2 | 1.1 | 0.95 | 1.09 | 16.4 | 11.0 | 13 | 12 | 38 | 3.7 |
| Embodiment 2 | 2.5 | 2.5 | 1.2 | 1.2 | 1.00 | 1.00 | 19.7 | 17.0 | 17 | 17 | 37 | 3.7 |
| Embodiment 3 | 2.8 | 2.9 | 1.3 | 1.2 | 0.97 | 1.08 | 120 | 14.9 | 14 | 13 | 34 | 3.2 |
| Embodiment 4 | 2.6 | 2.5 | 1 | 1.1 | 1.04 | 0.91 | 25.9 | 29.0 | 16 | 15 | 38 | 3.8 |
| Embodiment 5 | 2.5 | 2.5 | 1.2 | 1.2 | 1.00 | 1.00 | 19.7 | 17.0 | 17 | 17 | 37 | 3.7 |
| Embodiment 6 | 2.4 | 2.5 | 1.4 | 1.3 | 0.96 | 1.08 | 9.3 | 7.5 | 14 | 14 | 35 | 3.4 |
| Embodiment 7 | 2.6 | 2.5 | 1.3 | 1.3 | 1.04 | 1.00 | 17.0 | 14.5 | 15 | 14 | 35 | 3.7 |
| Embodiment 8 | 2.5 | 2.5 | 1.2 | 1.2 | 1.00 | 1.00 | 19.7 | 170 | 17 | 17 | 37 | 3.7 |
| Embodiment 9 | 2.4 | 2.5 | 1.1 | 1.2 | 0.96 | 0.92 | 22.4 | 12.3 | 15 | 15 | 40 | 3.7 |
| Embodiment 10 | 2.4 | 2.5 | 1.2 | 1.2 | 0.96 | 1.00 | 19.5 | 14.8 | 15 | 13 | 34 | 3.6 |
| Embodiment 11 | 2.5 | 2.5 | 1.2 | 1.2 | 1.00 | 1.00 | 19.7 | 17.0 | 17 | 17 | 37 | 3.7 |
| Embodiment 12 | 2.6 | 2.5 | 1.2 | 1.3 | 1.04 | 0.92 | 14.6 | 18.4 | 15 | 14 | 39 | 3.4 |
| Embodiment 13 | 2.6 | 2.5 | 1.2 | 1.2 | 1.04 | 1.00 | 32.9 | 35.2 | 14 | 15 | 38 | 3.8 |
| Embodiment 14 | 2.5 | 2.5 | 1.2 | 1.2 | 1.00 | 1.00 | 19.7 | 170 | 17 | 17 | 37 | 3.7 |
| Embodiment 15 | 2.4 | 2.5 | 1.2 | 1.2 | 0.96 | 1.00 | 8.6 | 7.1 | 14 | 13 | 35 | 3.5 |
| Embodiment 16 | 2.3 | 2.4 | 1.2 | 1.3 | 0.96 | 0.92 | 5.4 | 3.5 | 15 | 17 | 38 | 3.8 |
| Embodiment 17 | 2.5 | 2.5 | 1.2 | 1.2 | 1.00 | 1.00 | 19.7 | 170 | 17 | 17 | 37 | 3.7 |
| Embodiment 18 | 2.6 | 2.6 | 1.3 | 1.3 | 1.00 | 1.00 | 30.8 | 23.1 | 16 | 14 | 35 | 3.5 |
| | | | | | | | | | | | | |
| Comparative Embodiment 1 | 1.5 | 1.5 | 1 | 1.1 | 1.00 | 1.00 | 14.1 | 11.5 | 10 | 12 | 30 | 3.5 |
| Comparative Embodiment 2 | 3 | 3.1 | 2.8 | 2.7 | 0.97 | 1.04 | 5.5 | 5.4 | 3 | 1 | 20 | 2.6 |
| Comparative Embodiment 3 | 2.5 | 2.5 | - | - | - | - | - | - | 2 | 1 | 21 | 2.5 |
| Comparative Embodiment 4 | 1.2 | 1.3 | 1 | 1.1 | 1.00 | 0.94 | 14.9 | 11.2 | 8 | 9 | 30 | 3.4 |

Table 3 and Table 4 lead to the following conclusions:
The finished copper foil obtained in Embodiments 1 to 18 includes a first copper layer, a copper base layer, and a second copper layer. The copper base layer is located between the first copper layer and the second copper layer. The roughness Rz of a surface that is of the copper base layer and that is oriented toward the first copper layer is α₁ µm. The roughness Rz of a surface that is of the first copper layer and that is oriented back from the copper base layer is β₁ µm, where α₁ = 1.8 to 2.9, and β₁ = 1 to 1.4. The roughness Rz of a surface that is of the copper base layer and that is oriented toward the second copper layer is α₂ µm. The roughness Rz of a surface that is of the first copper layer and that is oriented back from the copper base layer is β₂ µm, where α₂ = 1.8 to 2.9, and β₂ = 1 to 1.4. The bonding force between the finished copper foil prepared in Embodiments 1 to 18 and the active material is increased unexpectedly, and is up to 12 to 17 N. In addition, the bonding force on two sides of the copper foil is very homogeneous. The copper foil is especially suitable for being coated on both sides.

Different from that in Embodiments 1 to 18, the finished copper foil obtained in Comparative Embodiment 1 includes a first copper layer, a copper base layer, and a second copper layer; the copper base layer is located between the first copper layer and the second copper layer; α₁ = 1.5, β₁ = 1, α₂ = 1.5, and β₂ = 1.1. The bonding force between the copper foil in Comparative Embodiment 1 and the active material is approximately 10 N.

Different from that in Embodiments 1 to 18, the finished copper foil obtained in Comparative Embodiment 2 includes a first copper layer, a copper base layer, and a second copper layer; the copper base layer is located between the first copper layer and the second copper layer; α₁ = 3, β₁ = 2.8, α₂ = 3.1, and β₂ = 2.7. The bonding force between the copper foil in Comparative Embodiment 2 and the active material is approximately 1 N to 3 N.

Different from Embodiments 1 to 18, Comparative Embodiment 3 implements just the first electrodeposition step and the etching step, without performing the second electrodeposition step. The copper foil in Comparative Embodiment 2 is not layered, and the surface roughness values on the two sides of the copper foil are 2.5 µm and 2.5 µm, respectively. The bonding force between the copper foil and the active material is as low as 1 N to 2 N.

Different from Embodiments 1 to 18, Comparative Embodiment 4 omits the etching step, and the raw copper foil produced by the first electrodeposition step is directly subjected to a second electrodeposition step, so that a first copper layer and a second copper layer are deposited on both sides of the raw copper foil. Although the copper foil in Comparative Embodiment 1 includes a first copper layer, a copper base layer, and a second copper layer, the copper base layer is located between the first copper layer and the second copper layer; α₁ = 1.2, β₁ = 1, α₂ = 1.3, and β₂ = 1.1, the bonding force between the copper foil and the active material is as low as 8 N to 9 N, as shown in Table 4.3.

As can be seen from a combination of the experimental data above, although the underlying mechanism remains unclear, possible reasons for the increased bonding force of the copper foil in Embodiments 1 to 18 are: the surfaces that are of the copper base layer and that are oriented toward the first copper layer and the second copper layer respectively possess a relatively high roughness (for example, roughness ≥ 1.8 to 2.9 µm). despite the fact that the bonding force between an excessively rough surface and an active material is not high, after the surface is overlaid with the first copper layer or the second copper layer, the first copper layer and the second copper layer achieve the following advantages: on the one hand, the two copper layers inherit the rough contour of the surface of the copper base layer; on the other hand, the two copper layers modify and improve a micro-morphology of the surface of the copper base layer, thereby ultimately producing a surface suitable for bonding with the active material, and exhibiting an unexpected force of bonding with the active material.

As shown in Table 4, the copper foils in Embodiments 1 to 18 also perform well in terms of tensile strength and elongation rate.

### 2. Analyzing the grain size

Finally, the following analyzes the average grain size on cross-sections of the copper foils in the embodiments and comparative embodiments. The average grain size on a cross-section of a copper foil may be determined with reference to the following standard: GBT 38532-2020 *Microbeam Analysis Electron Backscatter Diffraction Measurement of Average Grain Size.* Table 4 shows the test results.

As can be seen from the table below, in analyzing the cross-section of the copper foil, the cross-section of the copper foil in Embodiments 1 to 18 is divided into three layered regions: a first layered region, a core layered region, and a second layered region. The first layered region, the core layered region, and the second layered region are substantially parallel to the surface of the metal foil. The core layered region is located between the first layered region and the second layered region. The average grain size (a) of the first layered region is 15 to 57 nm; the average grain size (z) of the core layered region is 114 to 925 nm; the average grain size of the second layered region (b) is 14 to 69 nm, where a: z = 1: (5.4 to 32.9), and b: z = 1: (3.5 to 35.2). The first layered region, the core layered region, and the second layered region correspond to the cross sections of the first copper layer, the copper base layer, and the second copper layer, respectively.

In Embodiments 1 to 18, the use of a copper base layer with a relatively large grain size (for example, 114 to 925 nm) is conducive to production. In contrast to a small grain size, producing a copper deposition layer with a large grain size is more efficient and cost-effective, without sacrificing the performance of the finished copper foil. By using a copper base layer with a relatively small grain size (for example, 10 to 100 nm), the copper foil can still achieve an improved bonding force.

In Embodiments 1 to 18, the use of the first copper layer and second copper layer with a relatively small grain size (for example, 10 to 100 nm) is conducive to improving the bonding force of the copper foil. Although the underlying mechanism remains unclear, the copper deposition layer with a small grain size inherits the rough contour of the copper base layer on the one hand, and improves and modifies the micro-morphology of the surface of the copper base layer on the other hand, thereby forming a surface suitable for bonding with the active material.

The cross-section of the copper foil in Comparative Embodiment 3 exhibits no obvious partitioning interface. When the average grain size of the cross-section in Comparative Embodiment 2 is tested for different regions in the same way as the layered region structure in Embodiment 1, the results show that the grain size is uniformly 493 nm for all regions.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A metal foil,
comprising a first metal layer and a metal base layer that are stacked up, wherein
a roughness Rz of a surface that is of the metal base layer and that is oriented toward the first metal layer is α₁ µm, a roughness Rz of a surface that is of the first metal layer and that is oriented back from the metal base layer is β₁ µm, α₁ = 1.8 to 2.9, and β₁ = 1 to 1.4.

2. The metal foil according to claim 1,
comprising the first metal layer, the metal base layer, and a second metal layer that are stacked up, wherein the metal base layer is located between the first metal layer and the second metal layer; and
a roughness Rz of a surface that is of the metal base layer and that is oriented toward the second metal layer is α₂ µm, a roughness Rz of a surface that is of the second metal layer and that is oriented back from the metal base layer is β₂ µm, α₂ = 1.8 to 2.9, and β₂ = 1 to 1.4.

3. The metal foil according to claim 1 or 2, **characterized by** any one of:
a ratio of α₁ to α₂ is 0.9 to 1.1; or
a ratio of β₁ to β₂ is 0.9 to 1.1.

4. The metal foil according to any one of claims 1 to 3, **characterized in that**,
α₁ = 2.4 to 2.6; and β₁ = 1.1 to 1.3.

5. The metal foil according to any one of claims 1 to 4, **characterized in that**,
α₂ = 2.4 to 2.6; and β₂ = 1.1 to 1.3.

6. The metal foil according to any one of claims 1 to 5, **characterized in that**,
an average grain size a of the first metal layer and an average grain size z of the metal base layer satisfy: a: z = 1: (3 to 35).

7. The metal foil according to any one of claims 1 to 6, **characterized in that**,
an average grain size b of the second metal layer and an average grain size z of the metal base layer satisfy: b: z = 1: (3 to 35).

8. The metal foil according to any one of claims 1 to 7, **characterized in that**,
measured in nm, an average grain size a of the first metal layer satisfies 10 ≤ a ≤ 70;
measured in nm, an average grain size z of the metal base layer satisfies 100 ≤ z ≤ 1000; and
measured in nm, an average grain size of a second metal layer satisfies 10 ≤ b ≤ 70.

9. The metal foil according to any one of claims 1 to 8, **characterized in that**,
a thickness of the first metal layer is 1.2 to 2.0 µm, a thickness of the metal base layer is 4.4 to 5.2 µm, and a thickness of a second metal layer is 1.2 to 2.0 µm.

10. The metal foil according to any one of claims 1 to 9, **characterized in that**,
a total thickness of the metal foil is 7.2 to 8.4 µm.

11. The metal foil according to any one of claims 1 to 10, **characterized in that**,
the metal foil is **characterized by** one or more of:
a tensile strength of the metal foil is at least 34 kg/mm², and optionally 34 to 40 kg/mm²;
an elongation rate of the metal foil is at least 3.2%, and optionally 3.2% to 3.8%; or
a bonding force of the metal foil is at least 12 N/m², and optionally 12 to 17 N/m².

12. The metal foil according to any one of claims 1 to 11, **characterized in that**,
the first metal layer, the metal base layer, and a second metal layer each are independently made of copper, aluminum, nickel, titanium, silver, or an alloy of any one thereof; and
optionally, the first metal layer, the metal base layer, and the second metal layer are all made of copper or a copper alloy.

13. A method for preparing a metal foil, **characterized in that** the method comprises the following steps:
S1: providing a raw metal foil;
S2: roughening one surface of the raw metal foil to form a first roughened surface on one side of the raw metal foil, wherein a roughness Rz of the first roughened surface is α₁ µm, and α₁ = 1.8 to 2.9; and
S3: depositing a first metal layer on the first roughened surface, wherein
a roughness Rz of a surface that is of the first metal layer and that is oriented back from the first roughened surface is β₁ µm, and β₁ = 1 to 1.4.

14. A method for preparing a metal foil, **characterized in that** the method comprises the following steps:
S1: providing a raw metal foil;
S2: roughening both surfaces of the raw metal foil to form a first roughened surface and a second roughened surface on two sides of the raw metal foil respectively, wherein a roughness Rz of the first roughened surface is α₁ µm, and a roughness Rz of the second roughened surface is α₂ µm, α₁ = 1.8 to 2.9, and α₂ = 1.8 to 2.9; and
S3: depositing a first metal layer on the first roughened surface, and depositing a second metal layer on the second roughened surface, wherein
a roughness Rz of a surface that is of the first metal layer and that is oriented back from the first roughened surface is β₁ µm, and β₁ = 1 to 1.4; and
a roughness Rz of a surface that is of the second metal layer and that is oriented back from the second roughened surface is β₂ µm, and β₂ = 1 to 1.4.

15. The method according to claim 13 or 14, **characterized in that**,
in step S2, the roughness of both surfaces of the raw metal foil is achieved by one or more of the following processing methods:
chemical etching, electrochemical etching, or a combination thereof.

16. The method according to any one of claims 13 to 15, **characterized in that**,
in step S3, the raw metal foil is prepared by a first electrodeposition step, both surfaces of the raw metal foil are roughened by chemical etching, and
the first metal layer and a second metal layer are deposited on the first roughened surface and a second roughened surface respectively by a second electrodeposition step.

17. The method according to any one of claims 13 to 16, **characterized in that**,
in step S3, the first electrodeposition step is implemented in a first electroplating solution, and the first electroplating solution comprises the following components:
| | |
|---|---|
| Cu²⁺ | 50 g/L to 100 g/L; |
| H₂SO₄ | 150 g/L to 250 g/L; |
| Cl⁻ | 0.03 g/L to 0.08 g/L; |
optionally, the first electroplating solution further contains a gloss agent, a planarization agent, or a combination thereof; and
optionally, a pH value of the first electroplating solution is less than 4.

18. The method according to any one of claims 13 to 17, **characterized in that**,
in step S2, chemical etching is implemented in an etching solution, and the etching solution comprises the following components:
1-butyl-3-methylimidazolium chloride 0.5 g/L to 5 g/L; and
copper sulfate 50 g/L to 250 g/L.

19. The method according to any one of claims 13 to 18, **characterized in that**,
a second electrodeposition step is implemented in a second electroplating solution, and the second electroplating solution comprises the following components:
| | |
|---|---|
| Cu²⁺ | 50 g/L to 100 g/L; |
| H₂SO₄ | 150 g/L to 250 g/L; |
| Cl⁻ | 0.03 g/L to 0.08 g/L; |
optionally, the second electroplating solution further contains an electroplating additive such as a gloss agent, a planarization agent, or a combination thereof; and
optionally, a pH value of the first electroplating solution is less than 4.

20. The method according to any one of claims 13 to 19, **characterized in that**,
a current density of a first electrodeposition step is C₁ A/dm², and a current density of a second electrodeposition step is C₂ A/dm², and therefore, 1.25 ≤ C₁: C₂ <_ 5;
optionally, C₁ is 25 to 100, and C₂ is 10 to 40.

21. A current collector,
comprising the metal foil according to any one of claims 1 to 12 or the metal foil prepared by the method according to any one of claims 13 to 20.

22. A battery,
comprising the current collector according to claim 21.

23. An electrical device, **characterized in that**,
the electrical device comprises the battery according to claim 22, and the battery is configured to provide electrical energy.
